# EUROPEAN PATENT APPLICATION

(11) **EP 4 667 283 A2**
(43) Date of publication of application: **24.12.2025**
(21) Application number: 25183489.1
(22) Date of filing: 17.06.2025
(51) Int. Cl.: B60N 2/28

(54) **CHILD RESTRAINT SYSTEM WITH BELT TENSIONING MECHANISM**

(30) Priority: 18.06.2024 US 202463661281 P
(71) Applicant: Britax Child Safety Inc., Fort Mill, SC 29708 (US)
(72) Inventor: Brown, Rodney, Balaclava, Victoria (AU)
(74) Representative: K&L Gates LLP

(57) **Abstract**

A child seat configured to be secured to a car seat is provided. The child seat includes a base having a belt path configured to receive a belt and a tensioning mechanism pivotably attached to the base. The tensioning mechanism is adjustable between a first configuration and a second configuration. In the first configuration, the tensioning mechanism is configured to receive a portion of the belt. In the second configuration, the tensioning mechanism is configured to apply tension to the portion of the belt.

## Description

### PRIORITY CLAIM AND CROSS-REFERENCE TO RELATED APPLICATIONS

The present application claims priority to and the benefit of U.S. Provisional Patent Application No. 63/661,281 filed June 18, 2024, which is incorporated herein by reference in its entirety and relied upon.

### BACKGROUND

Child restraint systems, also commonly called child safety seats, child seats, car seats, or booster seats, among others, are designed to protect children in vehicles from the effects of impacts or sudden changes in motion (e.g., sudden acceleration, sudden deceleration, and the like). Child restraint systems, referred to hereinafter as child seats, may be used in a variety of vehicles with different seat types and/or seating configurations. It is important for a child seat to be properly secured to the vehicle (e.g., car) seat to protect the occupant, but it is not uncommon for child seats to be installed or used improperly. For example, some child seats are secured to a car seat with a seat belt of the car; but in such situations, securing the child seat may be awkward and difficult to maintain a proper amount of tension. In such situations, an improper amount of belt tension is undesirable and may negatively affect the safety of the occupant within the child seat. Further, a user may be required to secure the child seat to a vehicle seat with limited space, making it difficult to maneuver the child seat to assure proper securement.

### SUMMARY

The present disclosure relates to child restraint systems and, more particularly, to child restraint systems with belt tensioning systems.

Aspects of the subject matter described herein may be useful alone or in combination with one or more other aspects described herein. In an exemplary aspect of the present disclosure, a child seat is configured to be secured to a car seat. The child seat includes a base having a belt path configured to receive a belt and a tensioning mechanism pivotably attached to the base. The tensioning mechanism is adjustable between a first configuration and a second configuration. In the first configuration, the tensioning mechanism is configured to receive a portion of the belt. In the second configuration, the tensioning mechanism is configured to apply tension to the portion of the belt.

In a second aspect of the present disclosure, which may be combined with any other aspect listed herein unless specified otherwise, the tensioning mechanism includes a lever pivotable about a rod and a locking mechanism. The rod is fixed to a frame of the child seat and the locking mechanism is adjustable between a first configuration and a second configuration. The lever is able to pivot about the rod when the locking mechanism is in the first configuration, and the locking mechanism prevents the lever from pivoting about the rod when the locking mechanism is in the second configuration.

In a third aspect of the present disclosure, which may be combined with any other aspect listed herein unless specified otherwise, the locking mechanism includes a lever release lock. Actuation of the lever release lock translates a locking component from a locked position to an unlocked position, thereby adjusting the locking mechanism from the first configuration to the second configuration.

In a fourth aspect of the present disclosure, which may be combined with any other aspect listed herein unless specified otherwise, the locking component is a locking rod configured to engage a slot disposed within a locking plate. The locking plate includes a first portion and a second portion.

In a fifth aspect of the present disclosure, which may be combined with any other aspect listed herein unless specified otherwise, the locking rod engages the first portion of the locking plate in the locked position, and actuation of the lever release lock translates the locking rod from the first portion to the second portion.

In a sixth aspect of the present disclosure, which may be combined with any other aspect listed herein unless specified otherwise, the base includes a back wall, a base wall, and a base slide. Adjusting the tensioning mechanism from the first configuration to the second configuration translates the base slide away from the back wall and the base wall.

In a seventh aspect of the present disclosure, which may be combined with any other aspect listed herein unless specified otherwise, the child seat further includes a slide assembly configured to translate the base slide away from the back wall and the base wall in response to the tensioning mechanism adjusting from the first configuration to the second configuration. The slide assembly includes a slide component coupled to an arm of the tensioning mechanism, wherein the slide component is translatably coupled to a frame of the base.

In an eighth aspect of the present disclosure, which may be combined with any other aspect listed herein unless specified otherwise, in response to the tensioning mechanism adjusting from the first configuration to the second configuration, the arm translates the slide component in relation to the frame of the base, and wherein translation of the slide component correspondingly translates the base slide away from the back wall.

In a ninth aspect of the present disclosure, which may be combined with any other aspect listed herein unless specified otherwise, the child seat further incudes a lifting assembly configured to lift the base slide away from the base wall in response to the tensioning mechanism adjusting from the first configuration to the second configuration.

In a tenth aspect of the present disclosure, which may be combined with any other aspect listed herein unless specified otherwise, the lifting assembly includes an internal component connected to the slide component, wherein the internal component is disposed within an external sheath.

In an eleventh aspect of the present disclosure, which may be combined with any other aspect listed herein unless specified otherwise, translation of the slide component causes the internal component to extend from the external sheath, and wherein the internal component lifts the base slide away from the base wall as the internal component extends from the external sheath.

In a twelfth aspect of the present disclosure, which may be combined with any other aspect listed herein unless specified otherwise, the external sheath is coupled to the frame via a stationary rod.

In a thirteenth aspect of the present disclosure, which may be combined with any other aspect listed herein unless specified otherwise, the child seat includes a first lifting assembly and a second lifting assembly.

In a fourteenth aspect of the present disclosure, which may be combined with any other aspect listed herein unless specified otherwise, a child seat is configured to be secured to a car seat. The child seat includes a base having a belt path configured to receive a belt and a tensioning mechanism having a lever pivotably attached to the base. The tensioning mechanism is adjustable between a first configuration and a second configuration. In the first configuration, the tensioning mechanism is configured to receive a portion of the belt. In the second configuration, the tensioning mechanism is configured to apply tension to the portion of the belt.

In a fifteenth aspect of the present disclosure, which may be combined with any other aspect listed herein unless specified otherwise, the lever is pivotable about a rod. The rod is fixed to the frame of the child seat, and, in response to the lever pivoting about the rod, the tensioning mechanism is adjusted from the first configuration to the second configuration.

In a sixteenth aspect of the present disclosure, which may be combined with any other aspect listed herein unless specified otherwise, the lever includes a first tensioning section configured to deform the portion of the belt against a tensioning frame in the second configuration.

In a seventeenth aspect of the present disclosure, which may be combined with any other aspect listed herein unless specified otherwise, the child seat is secured to a vehicle seat in response to the first tensioning section deforming the portion of the belt against the tensioning frame.

In an eighteenth aspect of the present disclosure, which may be combined with any other aspect listed herein unless specified otherwise, the tensioning frame includes an outer bar and an inner bar, and the first tensioning section extends between the outer bar and the inner bar to deform the portion of the belt.

In a nineteenth aspect of the present disclosure, which may be combined with any other aspect listed herein unless specified otherwise, the base includes a locking mechanism configured to prevent rotation of the child seat.

In a twentieth aspect of the present disclosure, which may be combined with any other aspect listed herein unless specified otherwise, the locking mechanism includes a first attachment point disposed on a back wall of the base, and a second attachment point connected to a frame of a seat of the child seat.

Various implementations described herein may include additional systems, methods, features, and advantages, which cannot necessarily be expressly disclosed herein but will be apparent to one of ordinary skill in the art upon examination of the following detailed description and accompanying drawings. It is intended that all such systems, methods, features, and advantages be included within the present disclosure and protected by the accompanying claims.

### BRIEF DESCRIPTION OF THE FIGURES

The specification makes reference to the following appended figures, in which use of like reference numerals in different figures is intended to illustrate like or analogous components.
Figure 1 illustrates an example of a perspective view of a child seat in a front facing configuration, according to various embodiments.
Figure 2 illustrates an example of a perspective view of a child seat in a rear facing configuration, according to various embodiments.
Figure 3 illustrates an example of a perspective view of a child seat in a side facing configuration in a closed position, according to various embodiments.
Figure 4 illustrates an example of a perspective view of a child seat in a side facing configuration in a loading position, according to various embodiments.
Figure 5 illustrates an example of a perspective view of an internal assembly of a child seat with a tensioning mechanism in a closed position, according to various embodiments.
Figure 6 illustrates an example of a side view of an internal assembly of a child seat with a tensioning mechanism in a closed position, according to various embodiments.
Figure 7 illustrates an example of a side view of an internal assembly of a child seat with a tensioning mechanism in a loading position, according to various embodiments.
Figure 8 illustrates an example of a perspective view of an internal assembly of a child seat with a seat belt positioned within a tensioning mechanism in a loading position, according to various embodiments.
Figure 9 illustrates an example of a perspective view of an internal assembly of a child seat with a seat belt positioned within a tensioning mechanism in a closed position, according to various embodiments.
Figure 10 illustrates an example of a cross-sectional top view of an internal assembly of a child seat with a seat belt positioned within a tensioning mechanism in a closed position, according to various embodiments.
Figure 11 illustrates an example of a perspective view of an internal assembly of a child seat with a tensioning mechanism in a closed position, according to various embodiments.
Figure 12 illustrates an example of a top view of an internal assembly of a child seat with a tensioning mechanism in a closed position, according to various embodiments.
Figures 13 and 14 illustrate example perspective views of a child seat with a tensioning mechanism in a loading position, according to various embodiments.
Figures 15 to 17 illustrate example side views of a child seat with a tensioning mechanism in a closed position and a loading position, according to various embodiments.
Figure 18 illustrates a bottom view of a slide assembly of a child seat, according to various embodiments.
Figure 19 illustrates a side view of a seat belt aperture of a child seat in a closed position, according to various embodiments.
Figure 20 illustrates a side view of a seat belt aperture of a child seat, according to various embodiments.
Figure 21 illustrates a side view of a child seat having a secondary locking mechanism, according to various embodiments.
Figure 22 illustrates a cross-sectional view of a child seat having a secondary locking mechanism, according to various embodiments.
Figure 23 illustrates a magnified cross-sectional view of a child seat having a secondary locking mechanism, according to various embodiments.
Figures 24A-24B illustrate perspective views of a locked and unlocked configuration of a child safety seat with a tensioning mechanism, according to various embodiments.
Figures 25A-25C illustrate perspective, skeletal views of a locked and unlocked configuration of a child safety seat with a tensioning mechanism, according to various embodiments.
Figures 26A-26B illustrate front, skeletal views of a child safety seat with a tensioning mechanism including a magnetic lock hold, according to various embodiments.
Figures 27A-27B illustrate cross sectional views of a magnetic lock hold on a child safety seat with a tensioning mechanism, according to various embodiments.

### DETAILED DESCRIPTION

The subject matter of embodiments is described herein with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described. Directional references such as "up," "down," "top," "bottom," "left," "right," "front," and "back," among others, are intended to refer to the orientation as illustrated and described in the figure (or figures) to which the components and directions are referencing. Throughout this disclosure, a reference numeral with a letter refers to a specific instance of an element and the reference numeral without an accompanying letter refers to the element generically or collectively. Thus, as an example (not shown in the drawings), device "12A" refers to an instance of a device class, which may be referred to collectively as devices "12" and any one of which may be referred to generically as a device "12." In the figures and the description, like numerals are intended to represent like elements.

A child seat may be configured for installation based on the height and weight of a child and according to various guidelines and standards, such as those of the United States National Highway Transportation Safety Administration. To ensure maximum protection for an occupant of the child seat, the child seat must be secured to a fixed location in a vehicle, such as using a seat belt of the car seat or Lower Anchors and Tethers for Children ("LATCH") attachments. When seat belts are used to secure the child seats, the seat belts are often positioned around the child seat and then engaged with a buckle attached to the car seat. However, slack in the seat belt may often occur, even when the seat belt is tightly fastened, and such slack causes the child seat to be loosely secured to the vehicle, which presents an unsafe condition for the occupant of the child seat. Moreover, a user is often required to install the child seat in a vehicle with limited space, making it difficult to maneuver the child seat and properly position a seat belt around the child seat. With additional space, the chances of proper installment may increase, providing safer conditions for the occupant of the child seat.

Described herein are tensioning mechanisms for child seats that provide easy securing of the child seat using a seat belt. In certain aspects, the tensioning mechanisms described herein may allow a user to easily apply tension to a buckled seat belt during installation of the child seat, and may optionally allow for a one-handed operation of the tensioning mechanism by the user. The tensioning mechanism may secure the child seat to the car seat in a fully secured or tensioned configuration, which may provide increased safety for an occupant of the child seat. The tensioning mechanism may be configured to provide the user with a mechanical advantage, to ensure significant tensioning with minimal required effort. Additionally, the tensioning mechanism described herein in certain aspects may automatically adjust the child seat, providing additional space for the user to properly install the child seat. Various other advantages and benefits may be realized with the tensioning mechanisms described herein, and the aforementioned benefits and advantages should not be considered limiting.

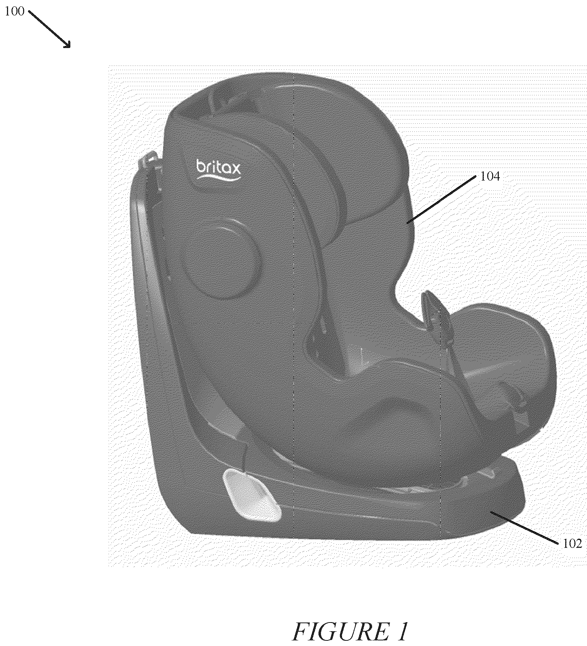

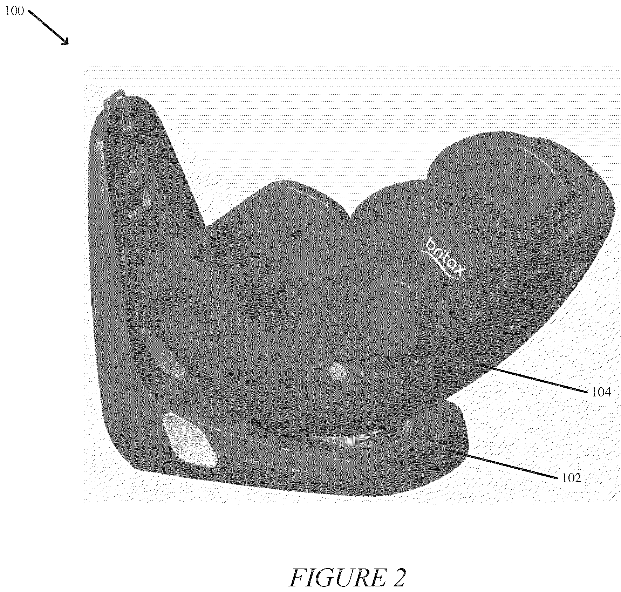

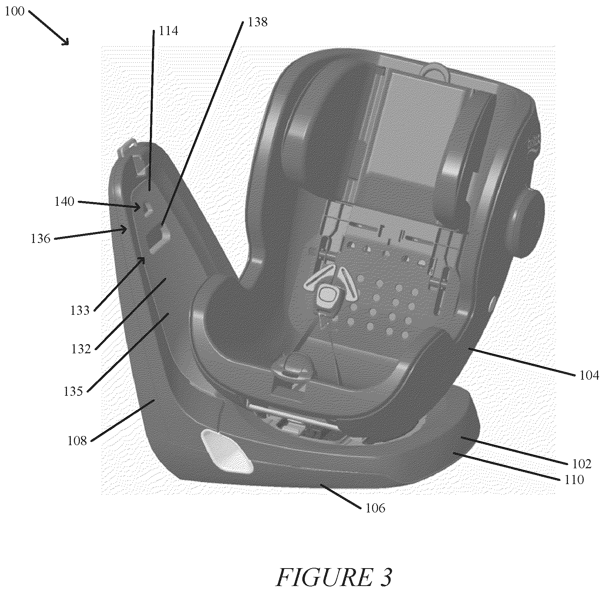

Figure 1 illustrates an example of a perspective view of a child seat in a front facing configuration, according to various embodiments. The child seat 100 includes a base 102 and a seat 104. In the illustrated embodiment, the child seat 100 is an infant car seat in a front facing configuration. The child seat 100 may be configured to swivel about the base 102. Thus, a user may, for example, rotate the child seat 100 into a rear facing configuration. Figure 2 illustrates an example of a perspective view of a child seat in a rear facing configuration, according to various embodiments. A user may also rotate the child seat 100 into a side facing configuration, as illustrated in Figure 3. The side facing configuration provides ease of access for a user to load an occupant into the seat 104. Once the occupant is secured to the seat 104, the user may then rotate the seat 104 to the front facing configuration or the rear facing configuration during transport. In other embodiments, the seat 104 may be fixed to the base 102, and the base 102 may be provided with other types of child seats, including, for example, a convertible car seat or a three-in-one car seat. The base 102 may be further configured to remain secured in the vehicle while, for example, the seat 104 is detachable. In an illustrative example, a user may only have to secure the base 102 to the vehicle seat once. Then, the user may attach or detach the seat 104 to the base 102 as desired. This is advantageous because a user is not required to re-secure the base 102 to the vehicle seat each time the seat 104 is removed.

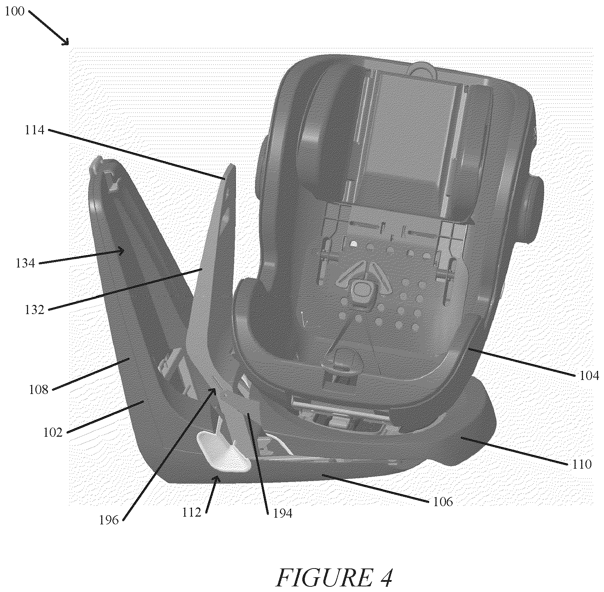

Figure 4 illustrates an example of a perspective view of a child seat in a side facing configuration in a loading position, according to various embodiments. The child seat 100 includes a loading position and a closed position. Figure 3 illustrates the child seat 100 in the closed position while Figure 4 illustrates the child seat 100 in the loading position. When the child seat 100 is adjusted from the closed position to the loading position, the base 102 automatically adjusts, providing additional space for a user to secure the base 102 to the vehicle seat during the installation process. Once the base 102 is properly installed in a vehicle seat, a user adjusts the child seat 100 to the closed position (as shown in Figure 3) to provide added security. Particularly, adjusting the child seat 100 to the closed position applies tension to a seat belt (not shown in Figure 4) to more securely attach the base 102 to the vehicle seat. The process of adjusting the child seat 100 between the closed position and the loading position is more fully described herein.

Referring to Figure 4, the base 102 of the child seat 100 includes a back wall 108 and a base slide 110 operatively connected to a base wall 106. The base slide 110 is configured to receive the seat 104, which, as introduced above, may be removably coupled to the base slide 110 (and thereby the base 102). For example, the seat 104 may be rotatably coupled to the base slide 110, such that the seat 104 may be adjusted to any number of configurations, including a front facing configuration (as shown in Figure 1), a rear facing configuration (as shown in Figure 2), or a side facing configuration (as shown in Figure 3). In another example, the seat 104 may be fixedly coupled to the base 102 in a predetermined configuration without the ability to adjust configurations.

Generally, a vehicle seat (not shown) includes a seat portion and a back portion. The seat portion includes a seat, providing an area for a passenger to sit while supporting the passenger's legs. The back portion includes a seat back to support the passenger's upper body. When properly installed in a vehicle, the base wall 106 engages the seat portion of the vehicle seat and the back wall 108 engages the back portion of the vehicle seat. In the rear facing configuration of Figure 2, the seat 104 faces the back wall 108 of the base 102. Similarly, in the front facing configuration of Figure 1, the seat 104 faces away from the back wall 108 of the base 102.

To install the child seat 100 in a vehicle, the base 102 is secured to a vehicle seat with the assistance of a tensioning mechanism 114. The tensioning mechanism 114 is configured to secure the base 102 (and thereby the child seat 100) to the vehicle seat. The tensioning mechanism 114 is pivotably connected to the base 102 and includes a closed position (as shown in Figure 3) and a loading position (as shown in Figure 4). The tensioning mechanism 114 is activated in the closed position and is deactivated in the loading position. Accordingly, the tensioning mechanism 114 is activated in the closed position of Figure 3 and deactivated in the loading position of Figure 4. The closed position and the loading position of the tensioning mechanism 114 correspond to the closed position and the loading position of the child seat 100.

In an illustrative example, the tensioning mechanism 114 is in the closed position of Figure 3. To secure the base 102 to the vehicle seat, the tensioning mechanism 114 is adjusted from the closed position to the loading position. In response to adjusting the tensioning mechanism 114 to the loading position, the base slide 110 translates from the closed position of Figure 3 to the loading position of Figure 4. As the base slide 110 translates to the loading position, the base slide 110 translates away from both the base wall 106 and the back wall 108 of the base 102. As the seat 104 is coupled to the base slide 110, the seat 104 also translates away from the base wall 106 and the back wall 108 of the base 102. With the tensioning mechanism 114 and the base slide 110 in their respective loading positions, additional space is provided for the installation process, and therefore the base 102 can be more easily secured to the vehicle seat.

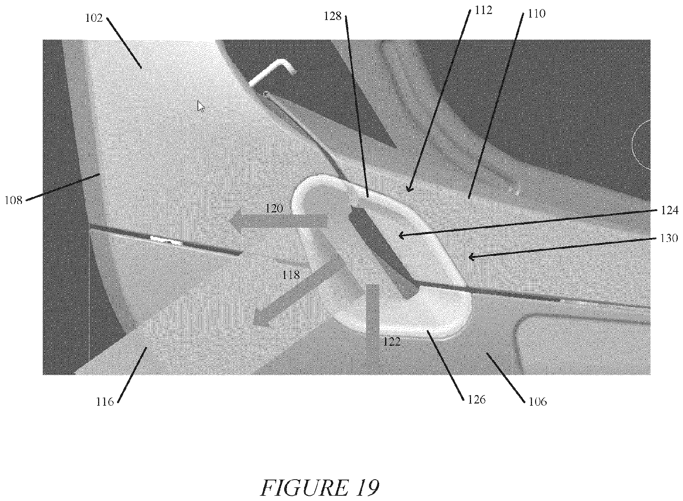

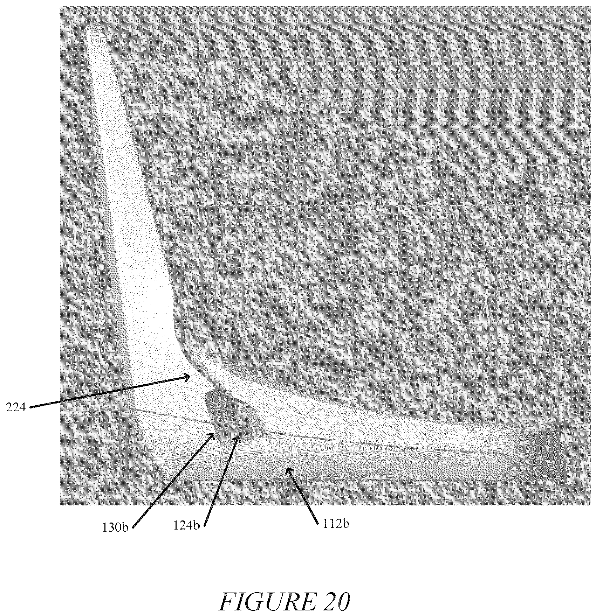

A seat belt (not shown in Figure 4) is then slid between the tensioning mechanism 114 and the back wall 108 until the seat belt engages a seat belt aperture 112 of the base 102. Once the seat belt is properly positioned in the seat belt aperture 112, the tensioning mechanism 114 is adjusted back to the closed position. When adjusting the tensioning mechanism 114 to the closed position, the tensioning mechanism 114 mechanically engages with, and subsequently tightens, the seat belt within the base 102, removing slack of the seat belt and securing the base 102 (and thereby the child seat 100) to the vehicle seat. The structure of the tensioning mechanism 114 provides added torque, exerting a greater amount of tensioning force on the seat belt with an equal amount of user force. Accordingly, the seat belt is tightened within the base 102 to a greater degree, providing added security in attaching the child seat 100 to the vehicle seat. Details of the seat belt aperture 112 are further discussed in reference to Figures 19 and 20.

To adjust the tensioning mechanism 114 from the closed position (as shown in Figure 3) to the loading position (as shown in Figure 4), the tensioning mechanism 114 is pivotably rotated via a lever 132. When adjusting to the loading position, the lever 132 rotates away from the back wall 108. In various embodiments, the back wall 108 includes a concave receptable 134 configured to house the lever 132 when the tensioning mechanism 114 is in the closed position. As shown in Figure 3, the lever 132 mates with the concave receptable 134 when the tensioning mechanism 114 is in the closed position. Moreover, in the closed position, a first surface 135 of the lever 132 is co-planar to the back wall 108 when the tensioning mechanism 114 is in the closed position.

The lever 132 may include a locking mechanism 136 having a locked position and an unlocked position. In the locked position (as shown in Figure 3), the locking mechanism 136 maintains the tensioning mechanism 114 in the closed position and prevents the tensioning mechanism 114 from rotating to the loading position. In the unlocked position, the tensioning mechanism 114 is adjustable from the closed position to the loading position and from the loading position to the closed position. To adjust the tensioning mechanism 114 from the closed position to the loading position, the locking mechanism 136 must be adjusted from the locked position to the unlocked position.

Referring to Figure 3, the locking mechanism 136 includes a lever release lock 138 disposed on an aperture 133 of the lever 132. The lever release lock 138 is configured to adjust the locking mechanism 136 from the locked position to the unlocked position. The lever release lock 138 is spring loaded and biased to the locked position. The spring biases the lever release lock 138 to the locked position in the direction toward the base wall 106. To adjust the lever release lock 138 (and thereby be able to adjust the tensioning mechanism 114), the force of the spring on the lever release lock 138 must be overcome. In other words, a force in the upward direction must be greater than the downward force of the spring against the lever release lock 138. In one embodiment, a gripping aperture 140 is disposed on the lever 132 to provide a supporting structure for overcoming the force of the lever release lock 138. In Figure 3, the gripping aperture 140 is positioned directly above the lever release lock 138. In an example, a user may use the gripping aperture 140 and the aperture 133 to provide a squeezing force to actuate the lever release lock 138, thereby adjusting the locking mechanism 136 to the unlocked position.

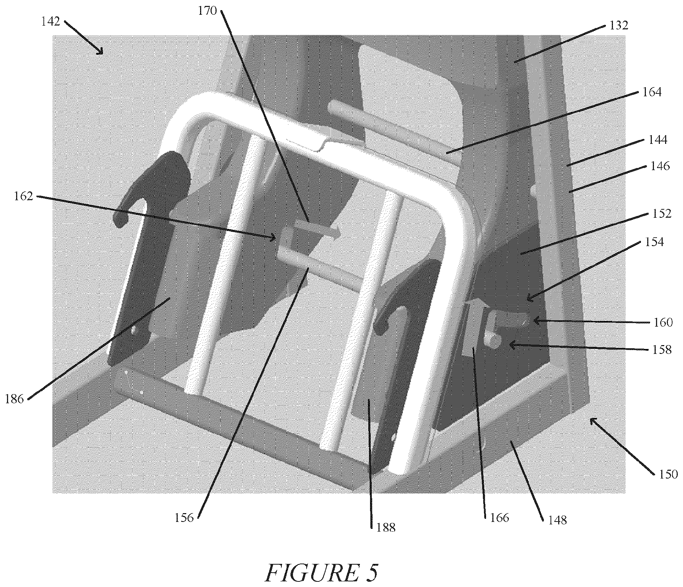

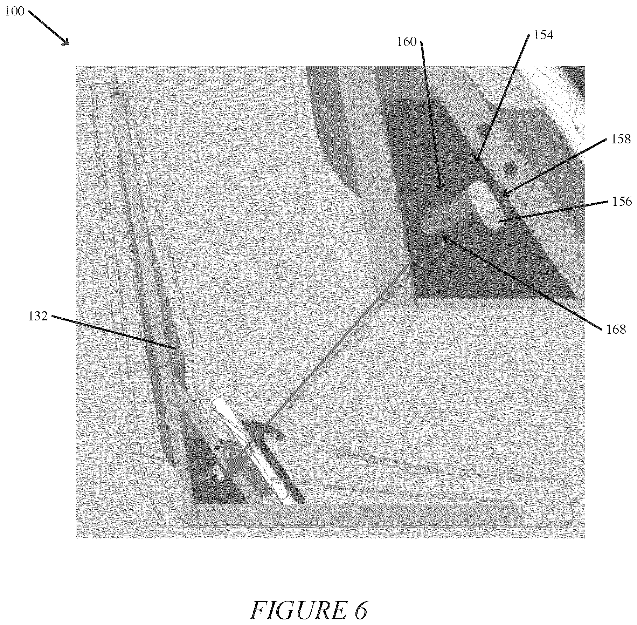

Figure 5 illustrates an example of a perspective view of an internal assembly of a child seat with a tensioning mechanism in a closed position, according to various embodiments. The internal assembly 142 of the child seat 100 includes a frame 144 having a back wall frame 146 and a base wall frame 148. In reference to Figure 4, the back wall frame 146 is disposed in the back wall 108 of the base 102, and the base wall frame 148 is disposed in the base wall 106 of the base 102. The frame 144 further includes a pivot rod 164. The pivot rod 164 extends through the lever 132 and connects to the back wall frame 146 at each end of the pivot rod 164. As discussed in reference to Figures 6 to 9, the lever 132 pivots about the pivot rod 164 as the tensioning mechanism 114 is adjusted between the closed position and the loading position.

The back wall frame 148 and the base wall frame 146 meet at a junction 150. A locking plate 152 is fixedly coupled to the junction 150 of the back wall frame 148 and the base wall frame 146. The locking plate 152 includes a locking plate slot 154 configured to accept a locking rod 156. The locking plate slot 154 includes a first portion 158 and a section portion 160. The lever 132 includes a lever slot 162 that corresponds to the first portion 156 of the locking plate slot 154. Accordingly, in Figure 5, the locking rod 156 extends through the lever slot 162 to engage the first portion 158 of the locking plate slot 154. When the locking rod 156 engages the first potion 158 of the locking plate slot 154, the locking rod 156 prevents the lever 132 from rotating, and thus prevents the tensioning mechanism 114 from being adjusted between the closed position and the loading position.

The lever release lock 138 (as introduced in reference to Figure 3) is operatively coupled to the locking rod 156. In one embodiment, the lever release lock 138 is operatively coupled to the locking rod 156 via a cable (not shown). In an illustrative example, the lever release lock 138 is actuated to overcome the force of the spring. In response, the locking rod 156 translates upward within the first portion 158 of the locking plate slot 154 and the lever slot 162. Both the lever slot 162 and the first portion 158 of the locking plate slot 154 guide the locking rod 156. Arrow 166 illustrates the direction of translation of the locking rod 156 in response to actuation of the lever release lock 138.

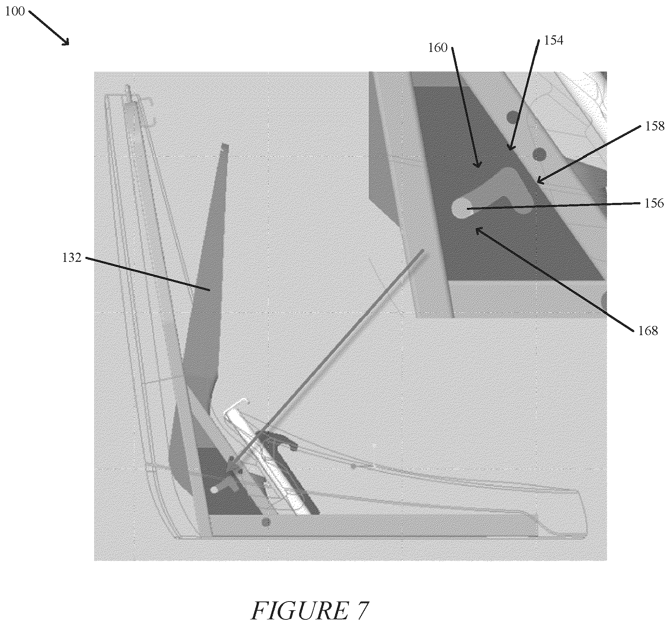

Figures 6 and 7 illustrate examples of side views of a locking rod corresponding to a tensioning mechanism in a locked position and a loading position, according to various embodiments. Figure 6 corresponds to the locking rod 156 as shown in Figure 5. When the lever release lock 138 translates the locking rod 156 upward, the lever 132 can then pivot as the locking rod 156 is able to translate through the second portion 160 of the locking plate slot 154 until the locking rod 156 meets an end 168 of the second portion 160 of the locking plate slot 154 (as shown in Figure 7).

Referring to Figure 5, a user desires to adjust the tensioning mechanism 114 from the closed position to the loading position. Accordingly, the user actuates the lever release lock 138 (not shown), which translates the locking rod 156 upward in the first portion 158 of the locking plate slot 154 and the lever slot 162. Then, then lever 132 can rotate about the pivot rod 164 as the pivot rod 164 is fixed to the frame 144. The pivoting of the lever 132 corresponds to the locking rod 156 translating in the second portion 160 of the locking plate slot 160. As previously introduced, the lever slot 164 does not include a portion that corresponds to the second portion 160 of the locking plate slot 160. Thus, when the locking rod 156 translates in the second portion 160 of the locking plate slot 160, the locking rod 156 concurrently provides a rotational force on the lever 132, represented by arrow 170.

Similarly, when a user desires to adjust the tensioning mechanism 114 from the loading position to the closed position, a user rotates the lever 132 in the opposite direction as adjusting the lever 132 to the loading position. For example, the user provides a force to rotate the lever 132, which translates the locking rod 156 from the end 168 of the second portion 160 of the locking plate slot 154 to the first portion 158 of the locking plate slot 154. Once the locking rod 156 translates to the first portion 158 of the locking plate slot 154, the spring biases the locking rod 156 to the locked position.

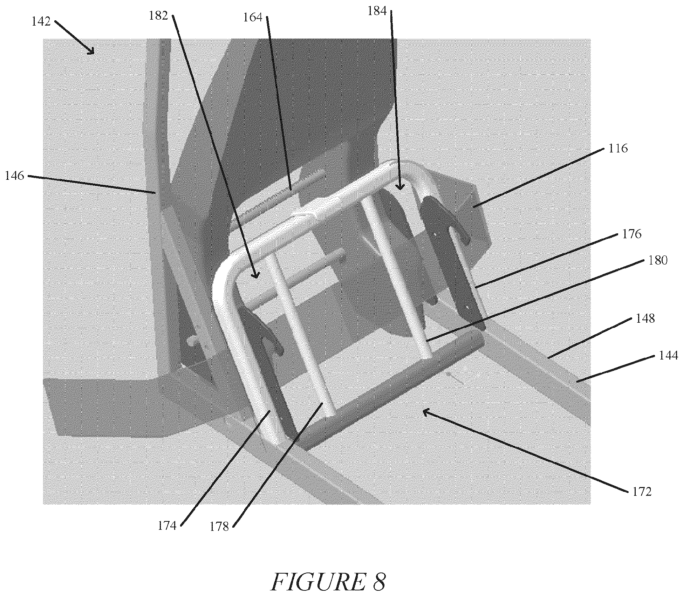

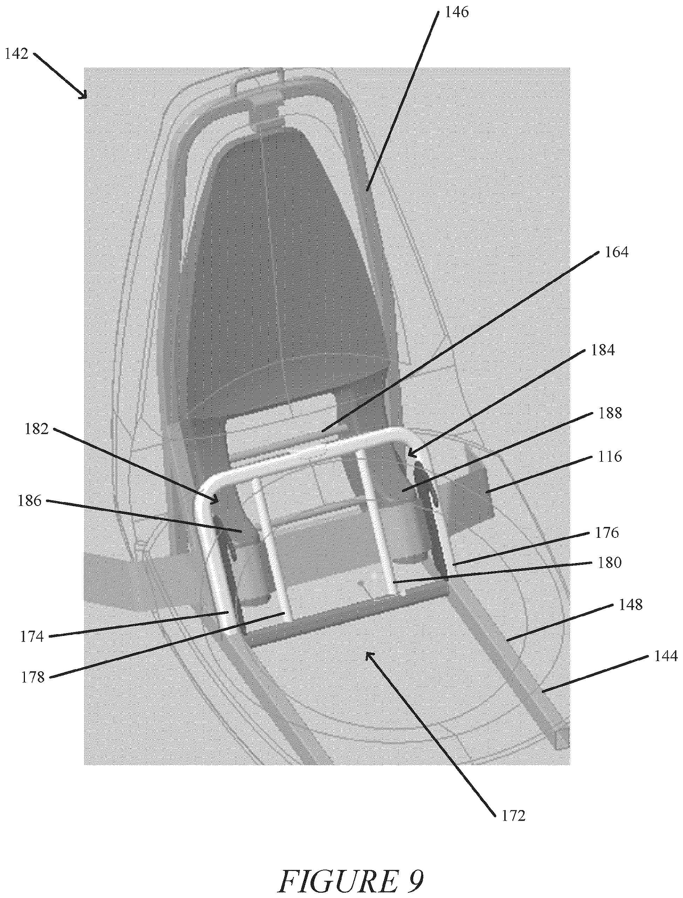

Figures 8 and 9 illustrate an example of a perspective view of an internal assembly of a child seat with a seat belt positioned within a tensioning mechanism in a loading position and a closed position, according to various embodiments. As introduced in reference to Figure 5, the internal assembly 142 of the child seat 100 includes a frame 144 having a back wall frame 146 and a base wall frame 148. The base wall frame 146 further includes a tensioning frame 172. The tensioning frame 172 is a fixed structure that the tensioning mechanism 114 uses to mechanically engage with, and subsequently tighten, the seat belt 116 within the base 102. The tensioning frame 172 includes a first outer bar 174, a second outer bar 176, a first inner bar 178, and a second inner bar 180. The tensioning frame 172 provides a first tensioning opening 182 (the space between the first outer bar 174 and the first inner bar 178) and a second tensioning opening 184 (the space between the second outer bar 176 and the second inner bar 180).

The lever 132 of the tensioning mechanism 114 includes a first tensioning section 186 and a second tensioning section 188. As shown in Figure 9, the first tensioning section 186 corresponds to the first tensioning opening 182 of the tensioning frame 172, and the second tensioning section 188 corresponds to the second tensioning opening 184 of the tensioning frame 172. In Figure 8, the seat belt 116 is properly positioned, and the tensioning mechanism 114 is in the loading position. As described in reference to Figures 5 to 7, a user may adjust the tensioning mechanism 114 to the closed position, which rotates the lever 132 about the pivot rod 164.

As a result of the lever 132 rotating about the pivot rod 164, the first tensioning section 186 and the second tensioning section 188 engage the seat belt 116. In an example, the first tensioning section 186 deforms the seat belt 116 against the first tensioning opening 182 of the tensioning frame 172. Similarly, the second tensioning section 188 deforms the seat belt 116 against the second tensioning opening 184 of the tensioning frame 172. The deformation of the seat belt 116 is shown in Figure 9. When the tensioning mechanism 114 is adjusted from the closed position to the loading position, the lever 132 disengages the seat belt 116 and the seat belt 116 returns to its non-deformed original position (as shown in Figure 8).

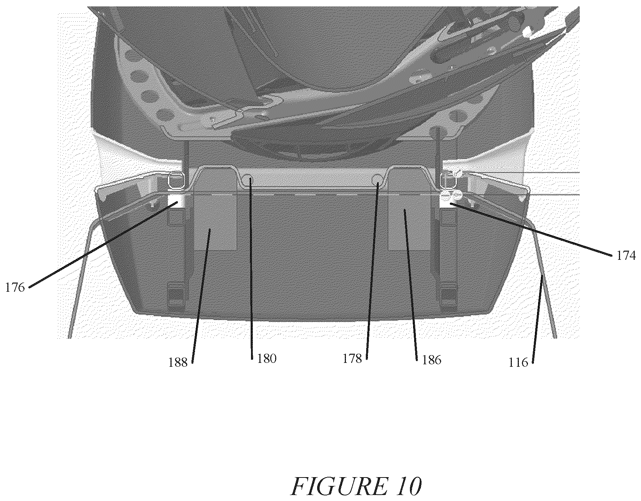

Figure 10 illustrates an example of a cross-sectional top view of an internal assembly of a child seat with a seat belt positioned within a tensioning mechanism in a closed position, according to various embodiments. As explained in reference to Figures 8 and 9, the internal assembly 142 of the child seat 100 includes a frame 144 having a back wall frame 146 and a base wall frame 148. The base wall frame 146 further includes a tensioning frame 172. Figure 10 illustrates the deformed shape of the seat belt 116 when the tensioning mechanism 114 is in the closed position.

As shown in Figure 10, the first tensioning section 186 and the second tensioning section 188 engage the seat belt 116 by extending through the first tensioning opening 182 and the second tensioning opening 184. By extending through their respective tensioning openings 182, 184, the seat belt 116 is deformed against the tensioning frame 172. For example, the first tensioning section 186 deforms the seat belt 116 against the first inner bar 178 and the first outer bar 174. Likewise, the second tensioning section 188 deforms the seat belt 116 against the second inner bar 180 and the second outer bar 176.

It should be appreciated that the structure of the lever 132 and the frame 144 can be adjusted to deform the seat belt 116 a desired amount (and thereby provide a desired amount of securing force). For example, one may lengthen the first tensioning section 186 and the second tensioning section 188 to extend further into the first tensioning opening 182 and the second tensioning opening 184. This further extension will deform the seat belt 116 to a greater degree, creating a greater force securing the base 102 to the vehicle seat. In another example, the number of tensioning sections of the lever (and corresponding tensioning openings of the frame) may be adjusted.

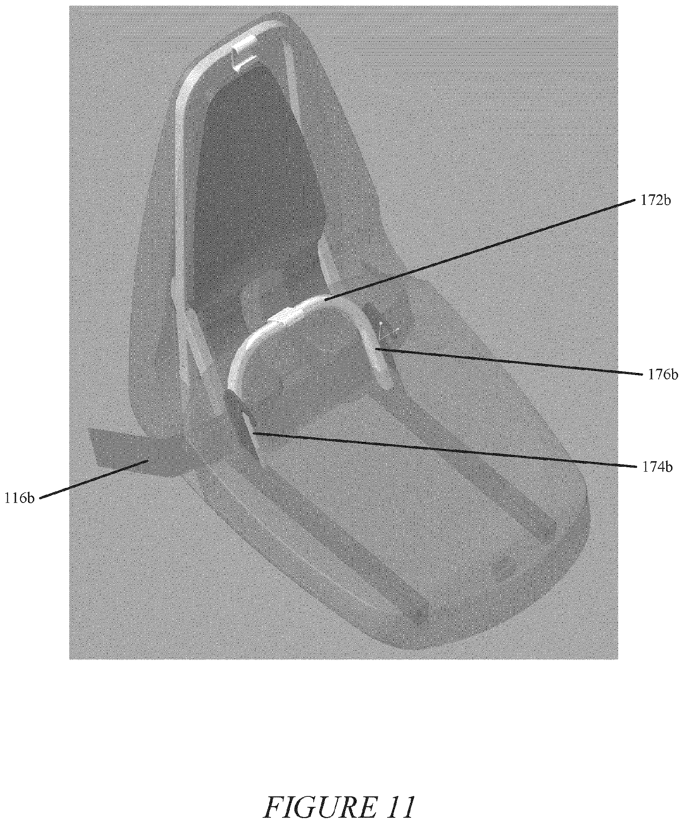

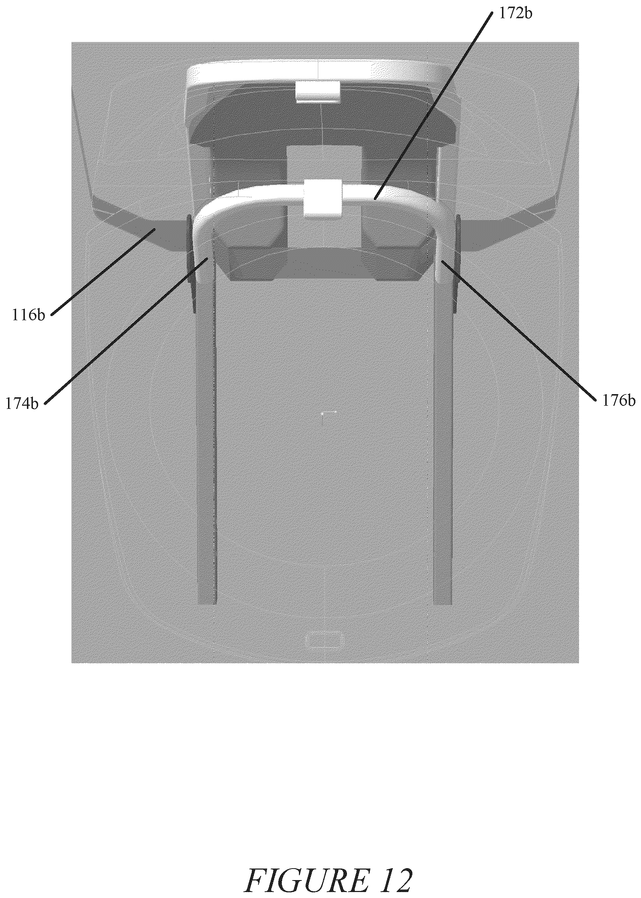

Further, the structure of the tensioning frame 172 may also be adjusted to deform the seat belt 116 a desired amount. For example, Figure 11 illustrates an example of a perspective view of an internal assembly of a child seat with a tensioning mechanism in a closed position, according to various embodiments. Figure 12 illustrates a top view of Figure 11. As shown in Figures 11 and 12, the tensioning frame 172b includes a first outer bar 174b and a second outer bar 176b. However, in contrast to the tensioning frame 172 of Figure 8, the tensioning frame 172b does not include a first inner bar 178 or a second inner bar 180. Because the first and second inner bars 178, 180 are not included in the tensioning frame 172b, the seat belt 116b is deformed to a lesser degree, which is highlighted when comparing the seat belt path of Figure 10 to Figure 12.

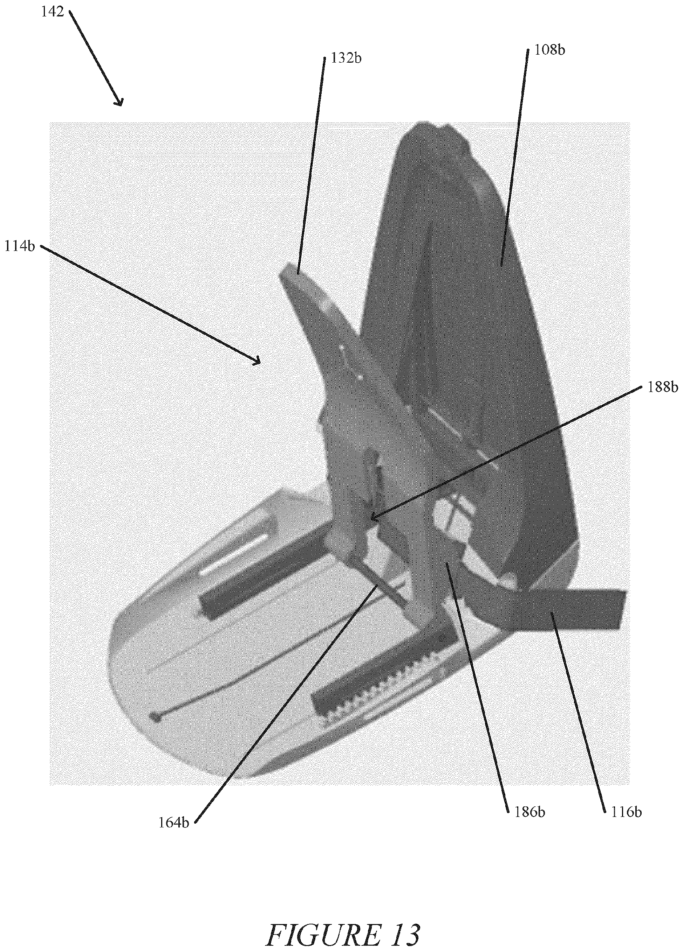

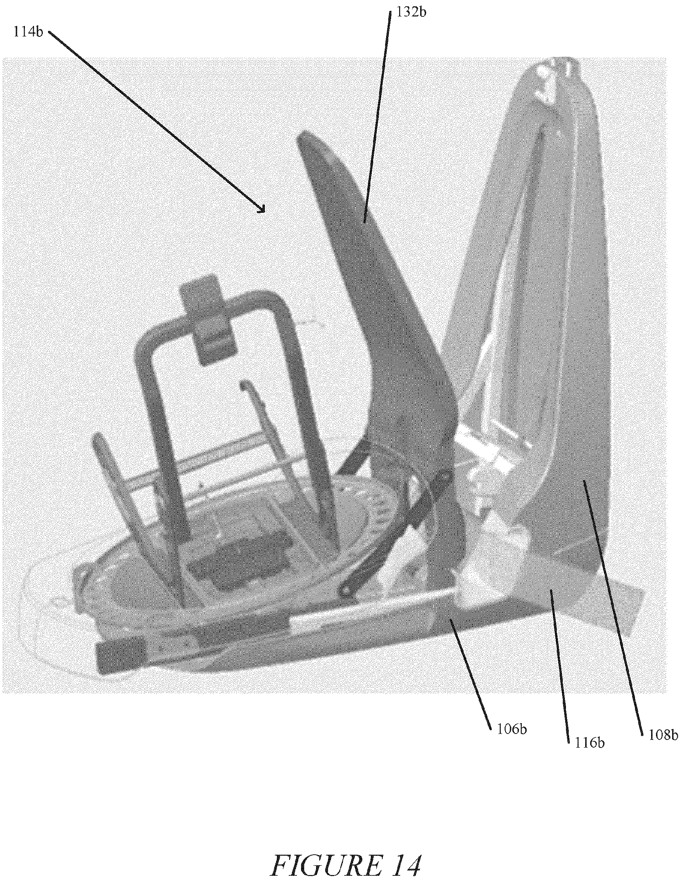

The tensioning mechanism 114 includes many embodiments with various features. In a number of non-limiting examples, the tensioning mechanism 114 is a first embodiment depicted in Figures 4 to 9. In a second embodiment, tensioning mechanism 114b is depicted in Figure 13 and 14. Figures 13 and 14 illustrate example perspective views of a child seat with a tensioning mechanism in a loading position, according to various embodiments. The tensioning mechanism 114b includes a lever 132b pivotably coupled to a pivot rod 164b, a first tensioning section 186b, and a second tensioning section 188b. When the tensioning mechanism 114b is in the loading position, a seat belt 116b can be properly positioned. In Figure 8, the seat belt 116 is positioned between the lever 132 and the tensioning frame 172. As the tensioning mechanism 114 is rotated from the loading position to the closed position, the first tensioning section 186 and the second tensioning section 188 rotate forward (away from the back wall frame 146) to engage the seat belt 116 against the tensioning frame 172.

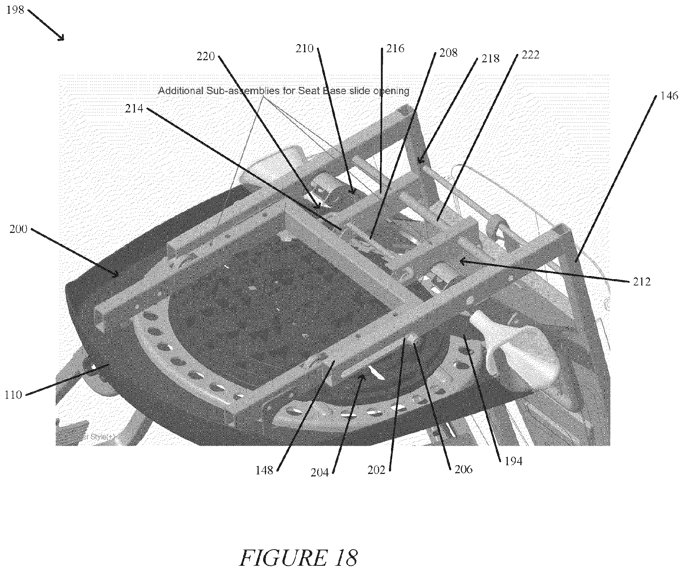

In Figure 13, the seat belt 116b is positioned between the tensioning mechanism 114b and the back wall 108b. When the tensioning mechanism 114b rotates about the pivot rod 164b, the first tensioning section 186b and a second tensioning section 188b rotate toward the back wall 108b to engage the seat belt 116b. As a result of the tensioning mechanism 114b rotating about the pivot rod 164b, the lever 132b deforms the seat belt 116b. Similarly, when the tensioning mechanism 114b is adjusted from the closed position to the loading position, the lever 132b disengages the seat belt 116b and the seat belt 116b returns to its non-deformed original position. In Figure 14, the child seat 100 is in the loading position, and thus, the tensioning mechanism 114b is also in the loading position. When the tensioning mechanism 114b is adjusted from the closed position to the loading position, the base slide 110b translates away from both the base wall 106b and the back wall 108b as shown in Figure 14. A more detailed explanation of the translation of the base slide 110b is covered in reference to Figure 18.

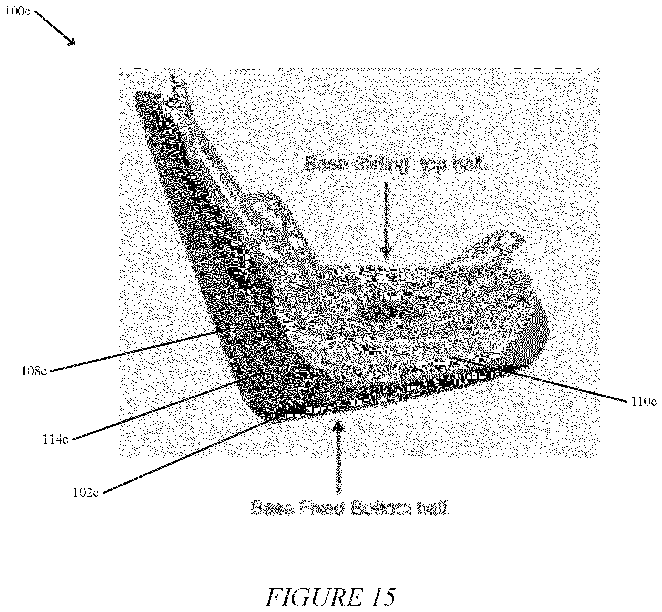

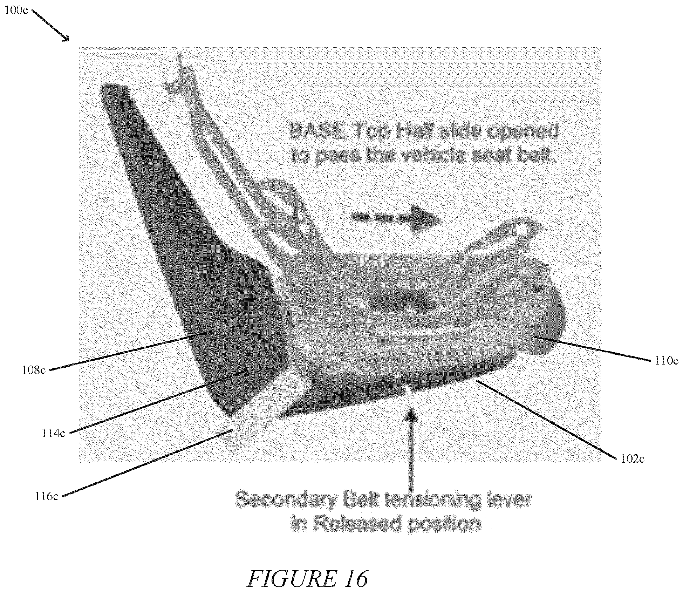

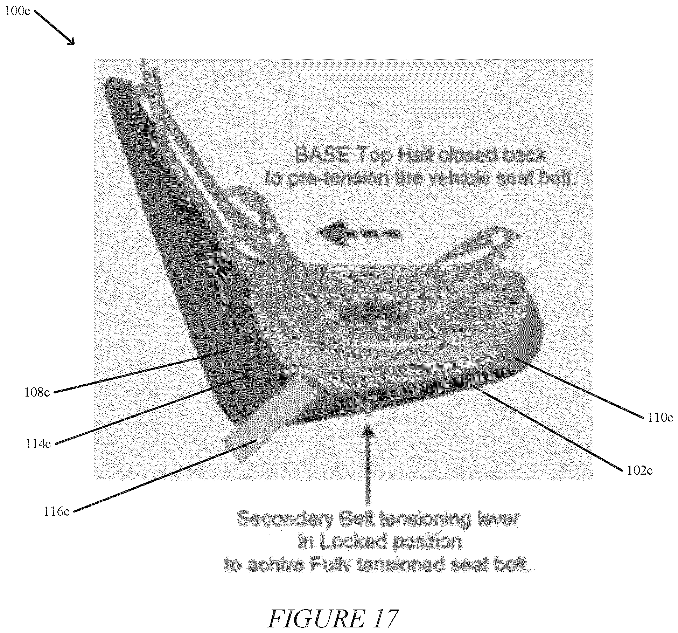

Figures 15 to 17 illustrate example side views of a child seat with a tensioning mechanism in a closed position and a loading position, according to various embodiments. The tensioning mechanism 114c is incorporated into the sliding functionality of the base slide 110c. In Figure 15, the child seat 100c includes a base 102c having a base slide 110c, which slides relative to the base 102c. The tensioning mechanism 114c is in the closed position in Figure 15. When adjusting the tensioning mechanism 114c to the loading position, the base slide 110c translates away from the back wall 108c of the base 102c. In Figure 16, the tensioning mechanism 114c is in the loading position with the seat belt 116c properly positioned.

To adjust the tensioning mechanism 114c back to the closed position, the tensioning mechanism 114c translates toward the back wall 108c. In response to the tensioning mechanism 114c translating toward the back wall 108c, the tensioning mechanism 114c mechanically engage with, and subsequently tighten, the seat belt 116c within the base 102c to secure the base 102c to the vehicle seat. To release the base 102c from the vehicle seat, the tensioning mechanism 114c may be adjusted to the loading position, causing the seat belt 116c to returns to its non-deformed original position.

Referring back to Figure 4, the child seat 100 may include a base 102 having a base slide 110. To provide additional space for securing the base 102 to the vehicle seat, the base slide 110 may translate away from the back wall 108 and the base wall 106 when the tensioning mechanism 114 is adjusted from the closed position to the loading position. The closed position of the base slide 110 corresponds to the closed position of the tensioning mechanism 114. The loading position of the base slide 110 corresponds to the loading position of the tensioning mechanism 114. As the tensioning mechanism 114 adjusts between the closed position and the loading position, the base slide 110 concurrently adjusts between the closed position and the loading position.

The lever 132 of the tensioning mechanism 114 is connected to an arm 194 via a slide slot 196. As shown with a comparison between Figure 3 and Figure 4, rotation of the tensioning mechanism 114 causes the arm 194 to translate down the slide slot 196. Translating of the arm 194, guided by the slide slot 196, causes the base slide 110 to translate outward, away from the back wall 108 of the base 102. Figure 18 illustrates a bottom view of a slide assembly of a child seat, according to various embodiments. In reference to Figure 4, the slide assembly 198 is disposed in the base wall 106 of the base 102. The slide assembly 198 is configured to translate the movement of the arm 194 into a corresponding movement of the base slide 110.

The slide assembly 198 includes a slide component 200, which is fixedly connected to the slide base 110. The slide component 200 is connected to the base wall frame 148. In an embodiment, a securing component 202 extends through a guide region 204 of the base wall frame 148. The securing component 202 engages a cap 206, which maintains the securing component 202 within the guide region 204. The arm 194 is connected to the slide component 200, such that movement of the arm 194 causes the slide component 200 to translate away from the back wall frame 146.

In an illustrative example, the tensioning mechanism 114 is in the closed position of Figure 3. The tensioning mechanism 114 is rotated and adjusted to the loading position of Figure 4. As the tensioning mechanism 114 rotates away from the back wall 108, the slide slot 196 causes the arm 194 to translate forward. This translation of the arm 194 causes the slide component 200 of the slide assembly 198 to correspondingly translate forward. The securing component 200 extending through the guide region 204 of the base wall frame 148 guides the movement of the slide component 200. As the slide component 200 is fixedly coupled to the base slide 110, the base slide 110 translates with the slide component 200 in response to the rotation of the tensioning mechanism 114.

In various embodiments, the rotation of the tensioning mechanism 114 also causes the base slide 110 to translate upward, away from the base wall 106. The slide component 200 includes a crossbar 208. The crossbar 208 is attached to a first lifting assembly 210 and a second lifting assembly 212. It should be appreciated that the following description of the structure and operation of the first lifting assembly 210 applies equally to the second lifting assembly 212. The first lifting assembly 210 includes a first end 218 and a second end 220. The first end 218 is connected to the crossbar 208 of the slide component 200 and the second end 220 is connected to a stationary bar 222. The stationary bar 222 extends through each lifting assembly 210, 212 and is attached to the base wall frame 148 at each end of the stationary bar 222.

The first lifting assembly 210 includes an internal component 214 slidably disposed within a complementary external sheath 216. In an illustrative example, the slide component 200 translates in response to the rotation of the tensioning mechanism 114 as previously described. Translation of the slide component 200 causes the crossbar 208 to likewise translate. The crossbar 208 pulls the internal component 214 of the first lifting assembly 210 outward from the external sheath 216. The connection points of the first lifting assembly 210 facilitate this outward extension. For example, the stationary bar 222 extends through the external sheath 216 without engaging the internal component 214 of the first lifting assembly 210. Accordingly, the internal component 214 extends outward while the stationary bar 222 prevents the external sheath 216 from translating.

As the internal component 214 extends outward, the configuration of the internal structure of the external sheath 216 biases the internal component 214 towards the base slide 110. In response, the base slide 110 translates upward to the loading position as shown in Figure 4. When adjusting the tensioning mechanism 114 to the closed position, the tensioning mechanism 114 rotates towards, and engages, the back wall 108 of the base 102. In response, the arm 194 pulls the slide component 200 toward the back wall frame 146. As the slide component 200 translates toward the back wall frame 146, the cross bar 208 pushes the internal component 214 of the first lifting assembly 210 back into the external sheath 216. As the internal component 214 extends into the external sheath 216, the external sheath 216 biases the internal component 214 in a downward direction toward the base wall 106, parallel to the external sheath 216 in order to translate into the external sheath 216. In response to the internal component 214 translating downward, the base slide 110 also translates downward into the closed position (as shown in Figure 3).

Figure 19 illustrates a side view of a seat belt aperture of a child seat in the closed position, according to various embodiments. The seat belt aperture 112 is position at a meeting point of the base wall 106, the back wall 108, and the base slide 110. The seat belt aperture 112 includes an elongated slot 124 with a beveled opening 130. The beveled opening 130 provides a smooth interface into and through the elongated slot 124, reducing stress on the seat belt 116. The elongated slot 124 is configured to receive a seat belt 116. In the embodiment of Figure 19, the elongated slot 124 is an angled structure that receives the seat belt 116 at a corresponding angled position. With the angled structure, the seat belt aperture 112 translate the securing force of the seat belt 116 in both the lateral and vertical directions to provide additional security between the base 102 and the vehicle seat.

For example, when secured, the seat belt 116 provides a force in the direction corresponding to arrow 118. The elongated slot 124 translates the force from the seat belt 116 into a lateral force directed toward the back wall 108 of the base 102 in the direction corresponding to arrow 120. Further, the elongated slot 124 translates the force from the seat belt 116 into a vertical force directed downward from the base wall 106 of the base 102 in the direction corresponding to arrow 122. As a result of the elongated slot 124 translating the force of the seat belt 116, the base wall 106 is forced against the seat portion of the vehicle seat and the back portion 108 is forced against the seat back of the vehicle seat. Thus, the base wall 106 engages the seat portion of the vehicle seat and the back wall 108 engages the back portion of the vehicle seat.

To facilitate the positioning of the seat belt 116 within the seat belt aperture 112, the seat belt aperture 112 includes a closed position (as shown in Figure 3) and a loading position (as shown in Figure 4). The closed position of the seat belt aperture 112 corresponds to the closed position of the tensioning mechanism 114. The loading position of the seat belt aperture 112 corresponds to the loading position of the tensioning mechanism 114. When the tensioning mechanism 114 is in the loading position, the seat belt aperture 112 is also in the loading position. When the tensioning mechanism 114 is in the closed position, the seat belt aperture 112 is also in the closed position.

The seat belt aperture 112 further includes a fixed component 126 and a translating component 128. The fixed component 126 is disposed on both the back wall 108 and the base wall 106 while the translating component 128 is disposed on the base slide 110. In an illustrative example, the tensioning mechanism 114 is in the loading position (and thus the seat belt aperture 112 is also in the loading position). As introduced above, the base slide 110 is translated away from the base wall 106 and the back wall 108. Accordingly, the translating component 128 of the seat belt aperture 112 is also translated away from the base wall 106 and the back wall 108. The positioning of the translating component 128 allows the seat belt 116 to be properly positioned in the elongated slot 124 of the seat belt aperture 112. Once the seat belt 116 is properly positioned in the elongated slot 124, the tensioning mechanism 114 can be adjusted to the closed position.

As the tensioning mechanism 114 is adjusted to the closed position, the translating component 128 translates toward the fixed component 126 to surround and secure the seat belt 116 within the seat belt aperture 112. In the closed position, the seat belt 116 cannot be removed from the seat belt aperture 112, which provides additional security. Similarly, to the remove the seat belt 116 from the seat belt aperture 112, the tensioning mechanism 114 can be adjusted to the loading position, thereby translating the translating component 126 away from the fixed component 128, allowing the seat belt 116 to disengage the seat belt aperture 112. Then, if desired, the base 102 can be removed from the vehicle.

Figure 20 illustrates a side view of a seat belt aperture of a child seat, according to various embodiments. In Figure 20, the seat belt aperture 112b does not include a translating component as shown and described in reference to Figure 19. The seat belt aperture 112b includes an elongated slot 124b with a beveled opening 126B. Like the seat belt aperture 112 of Figure 15, the beveled opening 126B provides a smooth interface into and through the elongated slot 124b, reducing stress on the seat belt. The elongated slot 124b is an angled structure that receives the seat belt 116 at a corresponding angled position. With the angled structure, the seat belt aperture 112b translate the securing force of the seat belt 116b in both the lateral and vertical directions to provide additional security between the base 102b and the vehicle seat as described in reference to Figure 19.

The seat belt aperture 112b includes a guide slot 224. The guide slot 224 is a fixed structure regardless of whether the tensioning mechanism is in the closed position or the loading position. The guide slot 224 receives the seat belt and guides the seat belt into the elongated slot 124b. The guide slot 224 is configured such that, as the seat belt slides through the guide slot 114, the seat belt is naturally positioned in the correct orientation to be properly received and positioned in the elongated slot 124b. In an example embodiment, the guide slot 224 is approximately 5 to 6 millimeters wide. With such width, the guide slot 224 positions the seat belt in the correct orientation as the seat belt slides through the guide slot 224. However, the width is sufficiently wide to allow a number of various seat belts through the guide slot 224 without increased difficulty of installation. For example, if the guide slot 224 is too narrow, a user may have difficulty inserting the seat belt through the guide slot for proper installation.

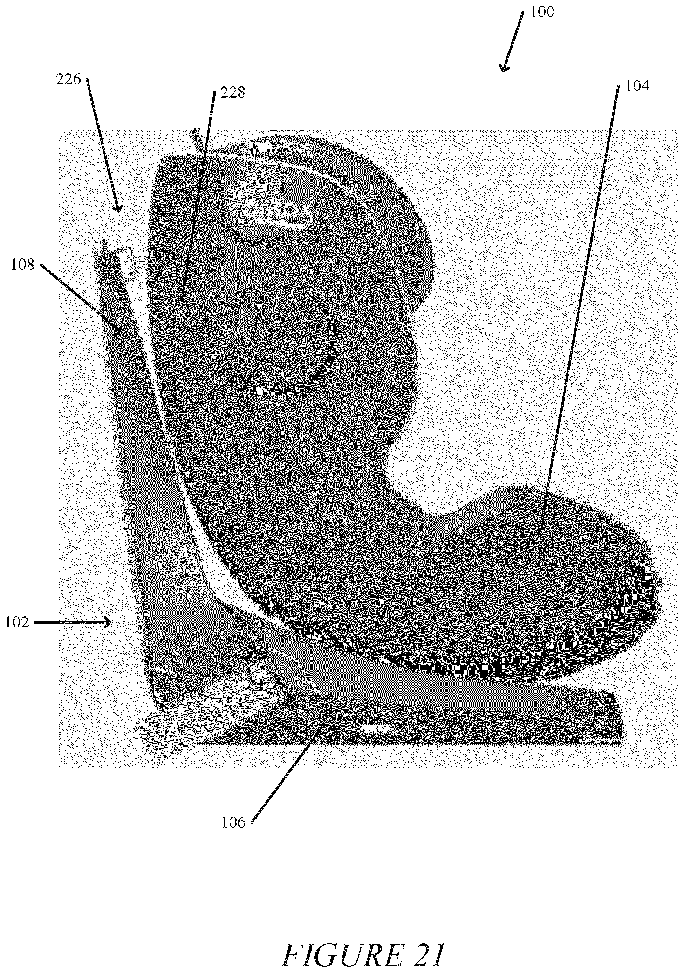

Figure 21 illustrates a side view of a child seat having a secondary locking mechanism, according to various embodiments. In an example, the child seat 100 is secured to a vehicle seat in the front facing configuration. While in the front facing configuration, the vehicle my experience a sudden impact. As previously described, the seat 104 is secured to the base wall 106 of the child seat 100, and the base 102 is secured to the vehicle seat. Due to the single attachment point between the seat 104 and the base 102, the seat 104 may naturally rotate about the attachment point in response to a sudden impact. Namely, the back wall 228 of the seat 104 may rotate away from the back wall 108 of the base 102. Rotation of the back the seat 104 away from the back wall 108 of the base 102 may lead to undesirable effects and decrease the safety of the child seat 100. For example, the rotation may cause the occupant to contact a seat in front of the vehicle seat that the child seat 100 is installed.

To combat undesired rotation of the seat 104 from the back wall 108 of the base 102, the child seat 100 may further include a secondary locking mechanism 226 for added security. The secondary locking mechanism 226 provides an additional attachment point between the seat 104 and the base 102 for added security. In the example described above, the secondary locking mechanism 226 prevents the seat 104 from rotating away from the back wall 108. As shown in Figure 21, the secondary locking mechanism 226 attaches the back wall 228 of the seat 104 to the back wall 108 of the base 102.

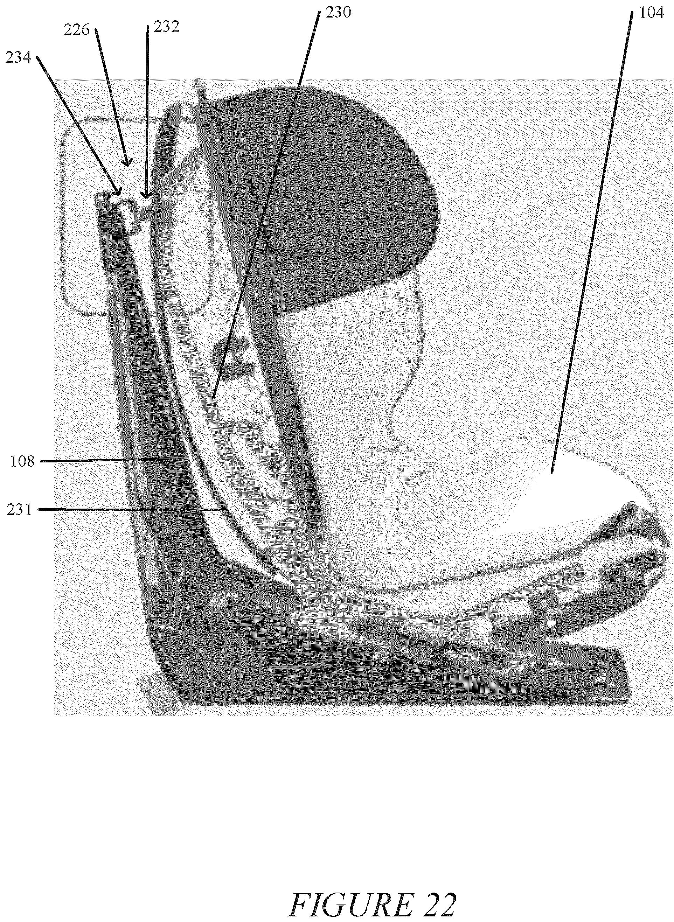

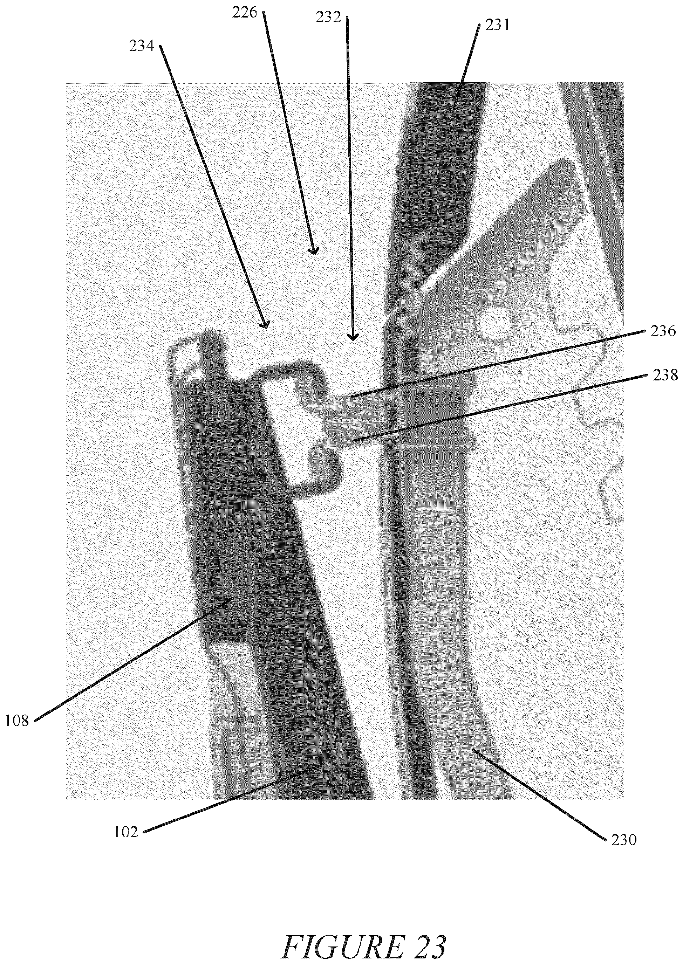

Figures 22 and 23 illustrate cross-sectional views of a child seat having a secondary locking mechanism, according to various embodiments. Referring to Figures 22 and 23, the seat 104 includes a frame 230 couple to a frame attachment point 232. The frame attachment point 232 extends from the frame 230 and through a shell 231 of the seat 104. By securing the frame attachment point 232 to the frame 230 of the seat 104, the secondary locking mechanism 226 can withstand greater force without failure. The frame attachment point 232 is configured to engage a back wall attachment point 234 of the back wall 108 of the base 102.

The secondary locking mechanism 226 includes an engaged position and a disengaged position. In the engaged position, the secondary locking mechanism 226 is in a locked position with the frame attachment point 232 connected to the back wall attachment point 234. In the disengaged position, the secondary locking mechanism 226 is in an unlocked position, and the frame attachment point 232 is disconnected to the back wall attachment point 234. The engaged position of the secondary locking mechanism may provide additional security during transport and the disengaged position is used when, for example, adjusting or removing the seat 104 from the base 102.

In an illustrative example, the secondary locking mechanism 226 is adjusted from the disengaged position to the engaged position. The secondary locking mechanism 226 includes a first side portion 236 and a second side portion 238. The secondary locking mechanism 238 is configured to outwardly bias the first side portion 236 away from the second side portion 238. To connect the frame attachment point 232 to the back wall attachment point 234, the first side portion 236 of the frame attachment point 232 and the second side portion 238 of the frame attachment point 232 are forced together, decreasing a distance between the first side portion 236 and the second side portion 238.

Once the distance between the first side portion 236 and the second side portion 238 is sufficiently decreased, the frame attachment point 232 can slide into the complementary shape of the back wall attachment point 234. Releasing the first side portion 236 and the second side portion 238 causes the first side portion 236 to outwardly extend from the second side portion 238 based on the biasing force to engage the back wall attachment point 234. The secondary locking mechanism 226 is in the engaged position when the frame attachment point 232 engages the back wall attachment point 234.

To adjust the secondary locking mechanism 226 from the engaged position to the disengaged position, the first side portion 236 and the second side portion 238 are again forced together, sufficiently decreasing a distance between the first side portion 236 and the second side portion 238 to allow the frame attachment point 232 to slide out of, and disengage, the complementary shape of the back wall attachment point 234.

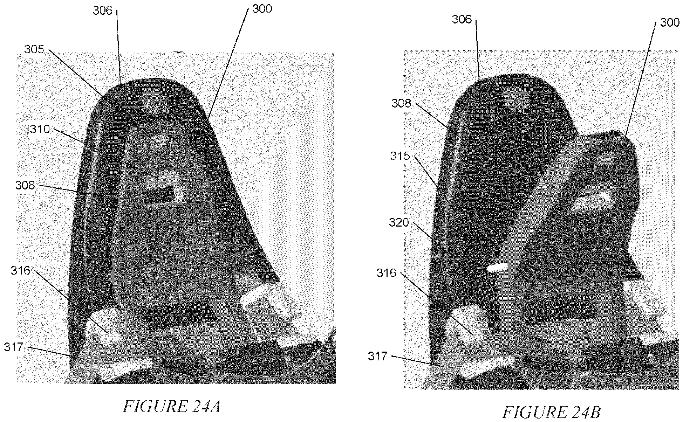

Figures 24A-24B illustrate perspective views of a locked and unlocked configuration of a child safety seat with a tensioning mechanism. In this alternate embodiment, the child seat 306 is secured to a vehicle seat with the assistance of a tensioning mechanism (as previously described). As shown in Figure 24A, the child seat 306 includes a lever 300. When in the locked configuration, the lever 300, pivotably coupled to the child seat 306, sits flush against the back wall 308 to secure the seat belt 317 with the child seat 306 with the aid of a locking mechanism (further described below). Specifically, the seat belt 317 is routed through belt hooks 316 and secured in place with the lever 300.

Figure 24B shows the lever 300 in the unlocked configuration. To unlock the lever 300, the user first presses an unlock button 305 and then lifts a handle 310 from an initial downward position, vertically, to an upward position. Specifically, the unlock button 305 is configured to interact with the handle 310 to allow the user to lift the handle 310. When the user lifts the handle 310, a pair of lateral projections 315 retract into the body of the lever 300, concurrently disengaging from receiving portions 320 that are on the child seat 306. In turn, the lever 300 unlocks and can pivot away from the back wall 308, to allow the user access to the seat belt 317 and belt hooks 316.

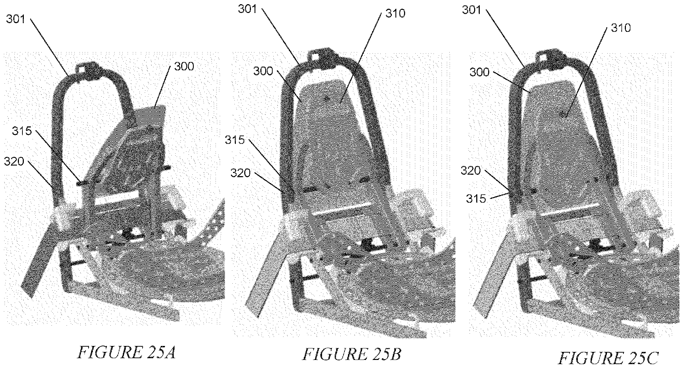

Figures 25A-25C illustrate perspective, skeletal views of a locked and unlocked configuration of a child safety seat with a tensioning mechanism. Specifically, Figure 25A shows the lever 300 being lowered, Figure 25B shows the lever 300 during locking, and Figure 25C shows the lever 300 in the locked configuration. As shown in Figure 25A, a child seat frame 301, which is part of the back wall 308 described in Figures 24A-24B, includes receiving portions 320 into which the lateral projections 315 insert to lock the lever 300. Figure 25B shows the lever 300 aligned with the frame 301. In order to align the lever 300 with the frame 301, the user lifts the handle 310. The geometry of the handle 310 is configured such that the upward movement of the handle is mechanically translated to retract the lateral projections 315. Once the lateral projections 315 are retracted, the user can move the lever 300 back, such to that the lateral projections 315 align with the receiving portions 320 on the seat frame 301. In this embodiment, the receiving portions 320 are holes sized to receive the lateral projections 315. However, the geometry and number of receiving portions 320 and lateral projections 315 can vary in alternate embodiments, so long as the lateral projections 315 and receiving portions 320 have a mating relationship. Figure 25C shows the mating relationship between the lateral projections 315 and receiving portions 320 when the lever 300 is in a locked configuration.

As seen in Figure 25C, in the locked configuration, the handle 310 is no longer in a lifted position, and rather in a lowered position. In an embodiment, the handle 310 may include components such as a spring or other resilient member configured to orient the handle in the lower position. As such, the user 'lifts' the handle 310 by pulling the handle 310 upwardly to overcome the tension from the spring or resilient member. The geometry of the handle 310 is configured such that the lateral projections 315 project maximally to mate with the receiving portions 320. The mating relationship between the lateral projections 315 and receiving portions 320 prevent pivotal movement of the lever 310, thereby locking the lever 310 with the frame 301.

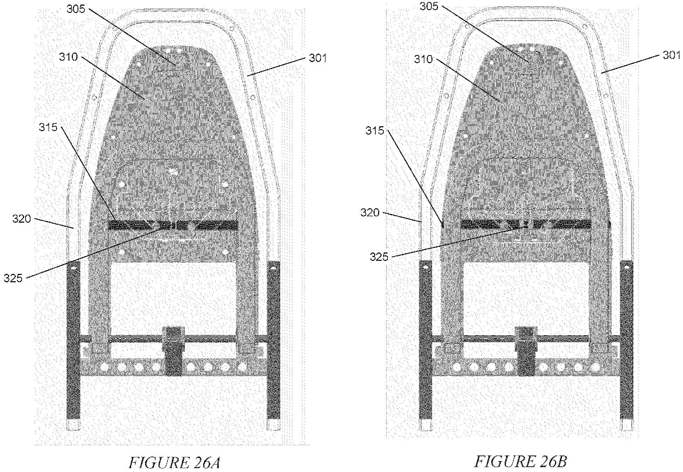

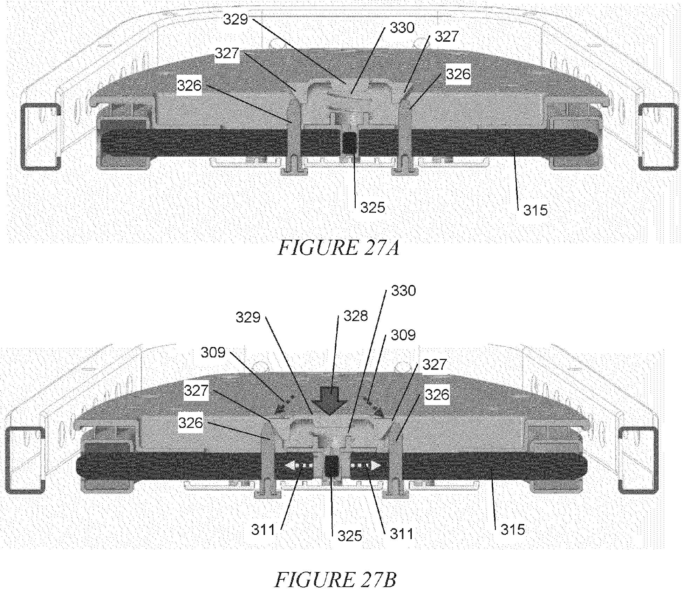

Relatedly, Figures 26A-26B illustrate front, skeletal views of a child safety seat with a tensioning mechanism including a magnetic lock hold. As seen in Figures 26A-26B, the magnetic lock 325 is located in the lever 310 and interacts with the handle 310 and lateral projections 315 to maintain the lateral projections 315 in a retracted state. In Figure 26A, when the handle 310 is lifted, the lateral projections 315 retract and interact with the magnetic lock 325 such that the lateral projections 315 are held in a retracted state via magnetic interactions. Conversely, in Figure 26B, the user moves the handle 310 downwardly and the handle concurrently moves the lateral projections 315 while also overcoming the magnetic interactions to allow the lateral projections 315 to project outwardly. Notably, the in overcoming the magnetic interactions, the user may also press the magnetic lock button 329 (shown in Figures 27A-27B).

Figures 27A-27B illustrate cross sectional views of a magnetic lock hold on a child safety seat with a tensioning mechanism. As seen in Figure 27A, and as previously described, when the lateral projections 315 fully retract, they are held in place by a magnetic lock 325. As the lateral projections 315 retract, orienting rods 326 in the lateral projections 315 interact with button components 327 in the magnetic lock button 329 and a spring 330 (or other resilient member) to orient the magnetic lock button into a pressible state. At the same time, the magnetic interactions keep the lateral projections 315 retracted.

In order to overcome magnetic interactions, as shown in Figure 27B, the user presses the magnetic lock button 329 in a downward force 328, overcoming the tension from the spring 300. Concurrently, the button components 327 translate the downward force 328 to a lateral force 309 that interacts with the orienting rods 326 and thereby forces the lateral projections 315 away from the magnetic lock 325 in a lateral direction 311. In turn, the magnetic interactions between the lateral projections 315 and the magnetic lock are overcome, such that the lateral projections 315 can move laterally as the handle moves downwardly.

According to an aspect of the invention, a child seat configured to be secured to a car seat, comprises: a base comprising a belt path configured to receive a belt; and a tensioning mechanism having a lever pivotably attached to the base, wherein the tensioning mechanism is adjustable between a first configuration and a second configuration, wherein, in the first configuration, the tensioning mechanism is configured to receive a portion of the belt, and wherein, in the second configuration, the tensioning mechanism is configured to apply tension to the portion of the belt.

In some embodiments of the child seat according to the aspect of the invention, the lever is pivotable about a rod, wherein the rod is fixed to the frame of the child seat, and wherein, in response to the lever pivoting about the rod, the tensioning mechanism is adjusted from the first configuration to the second configuration.

Further, in some embodiments, the lever comprises a first tensioning section configured to deform the portion of the belt against a tensioning frame in the second configuration. Further, in some embodiments, the child seat is secured to a vehicle seat in response to the first tensioning section deforming the portion of the belt against the tensioning frame. Further, in some embodiments, the tensioning frame comprises an outer bar and an inner bar, and the first tensioning section extends between the outer bar and the inner bar to deform the portion of the belt.

In some embodiments of the child seat according to the aspect of the invention, the base comprises a locking mechanism configured to prevent rotation of the child seat. Further, in some embodiments, the locking mechanism comprises: a first attachment point disposed on a back wall of the base; and a second attachment point connected to a frame of a seat of the child seat.

The many features and advantages of the present disclosure are apparent from the written description, and thus, the appended claims are intended to cover all such features and advantages of the disclosure. Further, since numerous modifications and changes will readily occur to those skilled in the art, the present disclosure is not limited to the exact construction and operation as illustrated and described. Therefore, the described embodiments should be taken as illustrative and not restrictive, and the disclosure should not be limited to the details given herein but should be defined by the following claims, whether foreseeable or unforeseeable now or in the future.

## Claims

1. A child seat configured to be secured to a car seat, the child seat comprising:
a base comprising a belt path configured to receive a belt; and
a tensioning mechanism pivotably attached to the base, wherein the tensioning mechanism is adjustable between a first configuration and a second configuration, wherein, in the first configuration, the tensioning mechanism is configured to receive a portion of the belt, and wherein, in the second configuration, the tensioning mechanism is configured to apply tension to the portion of the belt.

2. The child seat of Claim 1, wherein the tensioning mechanism comprises:
a lever pivotable about a rod, wherein the rod is fixed to a frame of the child seat;
a locking mechanism, wherein the locking mechanism is adjustable between a first configuration and a second configuration, wherein the lever is able to pivot about the rod when the locking mechanism is in the first configuration, and wherein the locking mechanism prevents the lever from pivoting about the rod when the locking mechanism is in the second configuration.

3. The child seat of Claim 2, wherein the locking mechanism comprises:
a lever release lock, wherein actuation of the lever release lock translates a locking component from a locked position to an unlocked position, thereby adjusting the locking mechanism from the first configuration to the second configuration.

4. The child seat of Claim 3, wherein the locking component is a locking rod configured to engage a slot disposed within a locking plate, wherein the locking plate includes a first portion and a second portion.

5. The child seat of Claim 4, wherein the locking rod engages the first portion of the locking plate in the locked position, and actuation of the lever release lock translates the locking rod from the first portion to the second portion.

6. The child seat of Claim 1, wherein the base comprises:
a back wall;
a base wall; and
a base slide, wherein adjusting the tensioning mechanism from the first configuration to the second configuration translates the base slide away from the back wall and the base wall.

7. The child seat of Claim 6, wherein the child seat further comprises a slide assembly configured to translate the base slide away from the back wall and the base wall in response to the tensioning mechanism adjusting from the first configuration to the second configuration, the slide assembly comprising:
a slide component coupled to an arm of the tensioning mechanism, wherein the slide component is translatably coupled to a frame of the base.

8. The child seat of Claim 7, wherein, in response to the tensioning mechanism adjusting from the first configuration to the second configuration, the arm translates the slide component in relation to the frame of the base, and wherein translation of the slide component correspondingly translates the base slide away from the back wall.

9. The child seat of Claim 7, wherein the child seat further comprises a lifting assembly configured to lift the base slide away from the base wall in response to the tensioning mechanism adjusting from the first configuration to the second configuration.

10. The child seat of Claim 9, wherein the lifting assembly comprises an internal component connected to the slide component, wherein the internal component is disposed within an external sheath.

11. The child seat of Claim 10, wherein translation of the slide component causes the internal component to extend from the external sheath, and wherein the internal component lifts the base slide away from the base wall as the internal component extends from the external sheath.

12. The child seat of Claim 11, wherein the external sheath is coupled to the frame via a stationary rod.

13. The child seat of Claim 11, wherein the child seat includes a first lifting assembly and a second lifting assembly.

14. A child seat configured to be secured to a car seat, the child seat comprising:
a base comprising a belt path configured to receive a belt; and
a tensioning mechanism having a lever pivotably attached to the base, wherein the tensioning mechanism is adjustable between a first configuration and a second configuration, wherein, in the first configuration, the tensioning mechanism is configured to receive a portion of the belt, and wherein, in the second configuration, the tensioning mechanism is configured to apply tension to the portion of the belt.

15. The child seat of Claim 14, wherein the lever is pivotable about a rod, wherein the rod is fixed to the frame of the child seat, and wherein, in response to the lever pivoting about the rod, the tensioning mechanism is adjusted from the first configuration to the second configuration.
